# EUROPÄISCHE PATENTANMELDUNG

(11) **EP 0 701 778 A2**
(43) Veröffentlichungstag der Anmeldung: **20.03.1996**
(21) Anmeldenummer: 95113844.5
(22) Anmeldetag: 04.09.1995
(51) Int. Cl.: A23K 3/03

(54) **Verfahren zur Konservierung von breiigen Futtermitteln aus Kartoffeln, Lebensmittelresten, Biertreber, Bierhefe, Destillationsschlempe und ähnlichen Bestandteilen sowie derartige konservierte Futtermittel**

(30) Priorität: 19.09.1994 DE 4433293; 21.03.1995 DE 19510158
(71) Anmelder: HOECHST AKTIENGESELLSCHAFT, D-65929 Frankfurt am Main (DE)
(72) Erfinder: Jager, Martin, Dr., D-55234 Offenheim (DE); Remmert, Karlheinz, D-65719 Hofheim (DE)

(57) **Zusammenfassung**

Die Erfindung betrifft ein Verfahren zur Konservierung von flüssigen und breiigen Futtermitteln aus Kartoffeln, Lebensmittelresten, Preßtreber, Bierhefe, Destillationsschlämpe und ähnlichen Bestandteilen, dadurch gekennzeichnet, daß man diese Produkte unter Verwendung von Intensivmischern räumlich oder zeitlich getrennt mit einer wäßrigen Kaliumsorbat-Lösung und einer wäßrigen Lösung einen physiologisch unbedenklicher Säure versetzt, sowie derartige konservierte Futtermittel.

## Beschreibung

Die Erfindung betrifft ein Verfahren zur Konservierung von Lebensmitteln bzw. Rückständen aus der Lebensmittelindustrie, die allein oder in Abmischung mit Futtergetreide bzw. anderen Futtermitteln als Viehfutter verwendet werden, sowie derartige konservierte Futtermittel.

Kartoffelabfälle, Lebensmittelabfälle und Rückstände aus der Lebensmittelindustrie wie z.B. Biertreber, Bierhefe und Destillationsschlempe enthalten ernährungsphysiologisch wertvolle Bestandteile. Aus diesem Grunde werden sie seit langem entweder als Einzelprodukt oder in Abmischung mit Futtergetreide bzw. anderen Futtermitteln als Viehfutter verwendet.

Wegen des hohen Wassergehaltes obengenannter Produkte unterliegen diese jedoch einem raschen mikrobiellen Verderb. Obwohl man den Wassergehalt teilweise durch starkes Pressen senken kann, ist dieser jedoch sowohl bei der alleinigen Verfütterung als auch in Abmischung mit anderen Futtermitteln noch ausreichend, um Wachstum von Mikroorganismen hervorzurufen. Dies gilt ganz besonders für den relativ hohen pH-Bereich, den die Abfälle der Lebensmittelindustrie üblicherweise aufweisen.

Das Problem der Verwertung von Lebensmittelabfällen als Viehfutter wird noch dadurch vergrößert, daß diese Produkte nicht immer kontinuierlich sondern in größeren Mengen während einer Produktionskampagne anfallen.

Es besteht zwar die Möglichkeit, die zur Diskussion stehenden Produkte sofort nach ihrem Anfall an die Landwirte weiterzugeben und unmittelbar an Tiere zu verfüttern. Eine derartige Verwertung ist zeitlich begrenzt auf die Produktionskampagne und kommt nur in unmittelbarer Nähe der entsprechenden Lebensmittelfabriken in Frage.

Zur längeren Verwertung von heiß anfallenden Lebensmittelabfällen wird auch versucht, diese in isolierten Behältern an Tierhalter abzugeben. Dieses Verfahren verlangt jedoch eine erhebliche Sorgfalt und ist von den Kosten der isolierten Behälter her gesehen unwirtschaftlich.

Wegen dieser Schwierigkeiten ist auch versucht worden, die Lebensmittelabfälle auf chemischem Wegen zu konservieren, also durch Zusatz sogenannter Konservierungsstoffe haltbar zu machen. Diese Konservierungsstoffe müssen physiologisch unbedenklich, für das Tier verträglich, futtermittelrechtlich zulässig, geruchs- und geschmacksneutral, bei 60 - 80°C nicht verdampfend bzw. verdunstend, preiswert und gut wirksam gegen Verderbniserreger sein.

Ideal wäre eine chemische Konservierung von Kartoffelabfällen, Lebensmittelabfällen und Abfällen aus der Lebensmittelindustrie, die eine offene Lagerung der Produkte allein oder in Abmischung mit Futtergetreide bzw. anderen Futtermitteln für mindestens einige Wochen möglich macht.

Diesem Ideal kommt die Sorbinsäure am nächsten, die wegen ihrer starken Wirkung gegen Schimmelpilze zur Konservierung von vielen Futtermitteln gut geeignet ist. Sorbinsäure hat dennoch bei den Abfallprodukten nur eine beschränkte Brauchbarkeit. Dies liegt an dem teilweise hohen pH-Wert der Produkte und den starken Nachinfektionen während der Verteilung, der Weiterverarbeitung und während des Fütterungszeitraumes der zur Diskussion stehenden Produkte.

Der allgemeine Stand der Technik bezüglich des Konservierens von flüssigen oder breiigen Futtermitteln durch chemische Konservierungsstoffe ist in der Patentanmeldung DP 34 12 083 beschrieben. Die im Rahmen dieses Patentes beschriebene Verfahrensweise (trockenes Einmischen pulverförmiger Sorbinsäure) erlaubt zwar eine Konservierung der genannten Güter, allerdings nur bis zu einer Woche, unter Verwendung relativ hoher Konservierungsstoff-Konzentrationen, so daß das Verfahren unwirtschaftlich ist.

Im Hinblick auf die stetig steigenden Deponierungskosten für nicht verwertbare Rückstände aus der Lebensmittelindustrie besteht eine erhebliche Nachfrage nach einem Verfahren, das die beschriebenen Nachteile vermeidet und es ermöglicht, diese Rückstände einfach und wirtschaftlich zu konservieren und so die längerfristige Nutzung dieser leicht verderblichen Rückstände als Viehfutter erlaubt.

Diese Aufgabe wird gelöst durch ein Verfahren zur Konservierung von flüssigen und breiigen Futtermitteln aus Kartoffeln, Lebensmittelresten, Preßtreber, Bierhefe, Destillationsschlämpe und ähnlichen Bestandteilen, dadurch gekennzeichnet, daß man diese Produkte unter Verwendung von Intensivmischern räumlich oder zeitlich getrennt mit einer wäßrigen Kaliumsorbat-Lösung und einer wäßrigen Lösung einen physiologisch unbedenklicher Säure versetzt.

Die räumliche Trennung ist möglich durch Verwendung eines Intensivmischers mit zwei Kompartimenten. Bei zeitlich aufeinanderfolgender Einmischung von erstens Kaliumsorbat und zweitens einer physiologisch unbedenklichen Säure kann auch ein Ein-Kompartiment-Intensivmischer verwendet werden.

Das erfindungsgemäße Verfahren erlaubt den feinen und dosisgenauen Eintrag sowohl der Kaliumsorbat-Lösung als auch der physiologisch unbedenklichen Säure in den Preßtreber. Dies gelingt unter Verwendung von Intensivmischern wie Pflugscharmischern oder Paddelmischern z.B. Typ Pegasus der Firma Dinnissen, Sevenum/Holland. Entsprechende Beispiele sind nachfolgend zusammengefaßt. Ein Pegasus-Paddelmischer, der üblicherweise als Einkammersystem konstruiert ist, muß zum gleichzeitigen, aber räumlich getrennten Eintrag von Kaliumsorbat und eine physiologisch unbedenklichen Säure in ein Zweikammersystem umgebaut werden. Diese gelingt durch Einziehen einer Trennwand über den Mischachsen. Der Mischer kann sowohl kontinuierlich als auch diskontinuierlich betrieben werden. Sowohl bei kontinuierlicher als auch bei diskontinuierlicher Verfahrensweise ist es notwendig, die Kaliumsorbat-Lösung vor der Säure einzumischen, da für den umgekehrten Fall mit Ausfällungen von Sorbinsäure zu rechnen ist. Der Eintrag sowohl von Kaliumsorbat als auch der Säure erfolgt in wäßriger Form über eine Düse, die die wäßrigen Lösungen in die fluidisierte Zone des Mischgutes einsprüht. Eine Vermischung der eingesprühten Lösungen muß in jedem Fall verhindert werden, da sonst wasserunlösliche Sorbinsäure gebildet wird.

Der zusätzliche Eintrag einer physiologisch unbedenklichen Säure, senkt den pH-Wert und steigert die Wirksamkeit des Kaliumsorbats, was zu einer Kostenersparnis (Einsatz geringerer Mengen Kaliumsorbat) führt.

Als physiologisch unbedenkliche Säuren sind z.B. Phosphorsäure, Salzsäure, Schwefelsäure, Fumarsäure, Milchsäure, Propionsäure und Weinsäure geeignet. In vielen Fällen hat sich Phosphorsäure bewährt, die auch aus Kostengründen vorteilhaft ist.

Es hat sich als günstig erwiesen eine 20 bis 60 %ige, insbesondere 30 bis 50 %ige Kaliumsorbatlösung einzusetzen, die verwendete Phosphorsäure kann in Konzentration von 40 bis 89 eingesetzt werden, vorteilhaft ist eine Konzentration von 70 bis 80 Gew.-%.

Sehr gute Konservierungsergebnisse werden erhalten wenn 0,05 bis 1, insbesondere 0,08 bis 0,8 Gew.-%, bevorzugt 0,1 bis 0,6 Gew.-% Kaliumsorbat (100 %ig) bezogen auf unkonserviertes Futtermittel eingesetzt wird.

Vorteilhaft ist es, die physiologisch unbedenkliche Säure in einer Konzentration von 0,05 bis 1, insbesondere 0,1 bis 0,8, bevorzugt 0,2 bis 0,6 Gew.-%, bezogen auf unkonserviertes Futtermittel einzusetzen.

Das erfindungsgemäße Verfahren weist gegenüber der DE 34 12 083 wesentliche Vorteile auf z.B.
- deutliche Verlängerung der Haltbarkeit der konservierten Güter
- geringere Konzentrationen an Sorbinsäure bzw. Kaliumsorbat
- einfachere technische Durchführung.

Sehr gut geeignet ist das Verfahren zur Konservierung von Preßtreber, der aufgrund eines speziellen Herstellverfahrens (Abpressen der Maische mit Filterpressen z.B. vom Typ Meura 2001) weniger Kohlenhydrate enthält als Naßtreber, der nach konventionellem Verfahren anfällt. Der Einsatz einer derartigen Technologie steigert die Bierausbeute um ca. 8 - 12 %. Aufgrund des Mangels an Kohlenhydraten kann Preßtreber jedoch im Gegensatz zu herkömmlichem Naßtreber nicht mehr mit Hilfe von Milchsäureorganismen siliert und damit längerfristig haltbar gemacht werden. Aus diesem Grund besteht gerade für den Preßtreber erheblicher Bedarf nach einem Stabilisierungs- bzw. Konservierungsverfahren. Unkonservierter Preßtreber verdirbt in Abhängigkeit von der Temperatur und der Keimbelastung innerhalb von 2 - 3 Tagen, so daß der Transport und die Verfütterung dieses Produktes sowohl für die Brauereien als auch den Landwirt ein erhebliches logistisches Problem darstellt.

Durch Anwendung des erfindungsgemäßen Verfahrens können für derartige Preßtreber Lagerzeiten von 2 bis 3 Wochen und mehr erzielt werden.

Die Erfindung betrifft ferner flüssige und breiige Futtermittel aus Kartoffeln, Lebensmittelresten, Preßtreber, Bierhefe, Destillationsschlämpe und ähnlichen Bestandteilen, die unter Verwendung von Intensivmischern räumlich oder zeitlich getrennt mit einer wäßrigen Kaliumsorbat-Lösung und einer wäßrigen Lösung einer physiologisch unbedenklichen Säure versetzt wurden.

Wichtig sind hierbei beispielsweise Futtermittel, die als physiologisch unbedenkliche Säure Phosphorsäure, Salzsäure, Schwefelsäure, Fumarsäure, Milchsäure, Propinsäure oder Weinsäure, insbesondere Phosphorsäure enthalten.

Von besonderem Interese sind Futtermittel, die 0,05 bis 1, insbesondere 0,08 bis 0,8, bevorzugt 0,1 bis 0,6 Gew.-% Kaliumsorbat (100 %ig) und 0,05 bis 1, insbesondere 0,1 bis 0,8, bevorzugt 0,2 bis 0,6 Gew.-% der physiologisch unbedenklichen Säure enthalten.

Von praktischer Bedeutung sind die Futtermittel, die nach dem beschriebenen Verfahren unter Verwendung von 20 bis 60 %-iger, insbesondere 30 bis 50 %-iger Kaliumsorbatlösung und 40 bis 89 %-iger, insbesondere 70 bis 80 %-iger Phosphorsäure hergestellt werden.
Sehr wichtig sind die Futtermittel, die aus Preßtreber bestehen.

Der Futterwert des Preßtrebers wird durch Kaliumsorbat ebensowenig beeinflußt wie andere fütterungstechnisch relevante Parameter. So hat das beschriebene Konservierungsverfahren nur äußerst geringen Einfluß auf analytisch und ernährungsphysiologisch relevante Parameter des Preßtrebers. Die Trockensubstanz wird aufgrund des Eintrags äußerst geringer Flüssigkeitsmengen nicht nennenswert beeinflußt. Der pH-Wert wird um ca. 1-1,5 pH-Einheiten abgesenkt, während die Konservierung erwartungsgemäß zu keiner Erhöhung des Kohlehydratanteils führt. Andere Parameter, wie organische Substanz, Rohprotein, Rohfaser, Rohfett und stickstofffreier Extrakt werden ebenfalls nicht nennenswert beeinflußt (siehe Tabelle 1).

**Tabelle 1**

| Einfluß der Konservierung auf analytisch relevante Parameter | | |
|---|---|---|
| | frisch | konserviert (z.B. 0,2 % Kaliumsorbat + 0,4 % Phosphorsäure) |
| Trockensubstanz | 31,7 % | 31,7 % |
| pH-Wert | 5,0 - 5,2 | 3,7 - 4,0 |
| Kohlenhydrate | < 0,5 % | < 0,5 % |
| organ. Substanz | 63 | 63 |
| Rohprotein | 83 | 79 |
| Rohfaser | 42 | 36 |
| Rohfett | 88 | 85 |
| N-freier Extrakt | 54 | 56 |

Anhand eines Fütterungsversuchs an Schafen konnte gezeigt werden, daß die Konservierung mit Kaliumsorbat und Phosphorsäure keinen Einfluß auf die scheinbare Verdaulichkeit von Preßtreber hat. Konservierter Preßtreber besitzt mit 63 % eine vergleichbare Verdaulichkeit wie frischer Naßtreber. Im Gegensatz hierzu weist silierter Naßtreber mit 58% erwartungsgemäß eine geringere scheinbare Verdaulichkeit auf. Dieser Rückgang an scheinbarer Verdaulichkeit ist auf Silierverluste zurückzuführen. Derartige Verluste treten beim konservierten Preßtreber nicht auf. Der Futterwert des proteinreichen Nebenprodukts Preßtreber (26% stickstoffhaltige Verbindungen in der Trockensubstanz) wird auch über die Lagerung von ca. 3 Wochen hinweg nur geringfügig beeinflußt. Zu Beginn des Versuchs betrug der Futterwert 6,6 MJ/kg, während nach dreiwöchiger Lagerung (ohne Abdeckung) der Futterwert 6,4 MJ/kg betrug.

Das erfindungsgemäße Futtermittel braucht vom Landwirt weder siliert noch abgedeckt noch in irgendeiner anderen Art und Weise bearbeitet zu werden. Eine offene, der Witterung ausgesetzte Lagerung, ist ebenfalls möglich. Dies stellt für den Landwirt eine erhebliche Arbeitserleichterung im Vergleich zur Silierung von herkömmlichem Treber dar.

Mit den erfindungsgemäßen Konservierungsverfahren und Futtermitteln wird das Entsorgungsproblem der Brauereien für Preßtreber ebenso gelöst wie das Stabilitätsproblem des Preßtrebers während der Verfütterung beim Landwirt.

Gegenüber einem ebenfalls zur Stabilisierung von Preßtreber verwendeten Verfahren auf Basis einer Stärke- und einer Milchsäuremikroorganismensuspension hat erfindungsgemäßes Konservierungsverfahren erhebliche Vorteile. Dies sind:
- kein Silieren mehr erforderlich (Arbeitsersparnis, Kostenersparnis)
- keine Silierverluste
- keine Umweltbelastung durch Austreten der Silierflüssigkeit
- Kostenersparnis durch verbesserte Logistik.

Die folgenden Beispiele sollen das Verfahren erläutern, ohne es darauf zu beschränken.

### Beispiel 1

Nach Befüllen eines Pegasus-Paddelmischers mit Preßtreber werden Kaliumsorbat-Lösung (50 %) und Phosphorsäure-Lösung (75 %) mit einem Druck von ca. 3 bar auf die fluidisierte Zone des Mischgutes aufgesprüht.

### Dosierungen

1. 0,1 % Kaliumsorbat + 0,1 % Phosphorsäure (Mischzeit insgesamt 60 Sekunden)
2. 0,1 % Kaliumsorbat + 0,4 % Phosphorsäure (Mischzeit insgesamt 100 Sekunden)
3. 0,2 % Kaliumsorbat + 0,2 % Phosphorsäure (Mischzeit insgesamt 80 Sekunden)
4. 0,05 % Kaliumsorbat + 0,4 % Phosphorsäure (Mischzeit insgesamt 90 Sekunden).

### Ergebnisse

| Proben-Nummer | Wasser-Gehalt (1 Std. Trockenlampe 160 V)(%) | pH-Wert (2 g in 10 ml dest. Wasser) | Kaliumsorbat-Gehalt (%) | | Haltbarkeit in Tagen |
|---|---|---|---|---|---|
| | | | soll | ist | |
| K 1 | 73,6 | 3,74 | - | - | 3 |
| K 2 | 74,2 | 3,87 | - | - | 1 |
| 1 A | 73,3 | 3,77 | 0,1 | 0,11 | |
| 1 B | 73,0 | 3,77 | 0,1 | 0,12 | 13 |
| 1 C | 74,4 | 3,79 | 0,1 | 0,11 | |
| 2 A | 73,9 | 3,53 | 0,1 | 0,1 | |
| 2 B | 73,7 | 3,55 | 0,1 | 0,1 | 13 |
| 2 C | nicht bestimmt | 3,56 | 0,1 | 0,12 | |
| 3 A | nicht bestimmt | 3,81 | 0,2 | 0,21 | |
| 3 B | nicht bestimmt | 3,82 | 0,2 | 0,22 | 25 |
| 3 C | nicht bestimmt | 3,81 | 0,2 | 0,22 | |
| 4 A | nicht bestimmt | 3,58 | 0,05 | 0,07 | |
| 4 B | nicht bestimmt | 3,58 | 0,05 | 0,07 | 7 |
| 4 C | nicht bestimmt | 3,57 | 0,05 | 0,07 | |
| K = Kontrolle 1. - 4. siehe unter "Dosierungen" | | | | | |

### Beispiel 2

### 1. Dosiergeräte

Je eine Mohno-Pumpe für wäßrige Kaliumsorbat-Lösung oder Ortho-Phosphorsäure (Kaliumsorbat löst sich nicht in Phosphorsäure, so daß die getrennte Dosierung der Flüssigkeiten unbedingt notwendig ist). Kontinuierlicher Pflugscharmischer mit 2 separaten Zulaufrohren wahlweise ohne bzw. mit Einstoffdüse.

### 2. Dosierung

| | pro 35 kg Biertreber (ml) | pro 1000 kg Biertreber/h (l) |
|---|---|---|
| Ortho-Phosphorsäure 75 %ig | 44 | 1,26 |
| Kaliumsorbat-Lösung 40 %ig | 245 | 7,00 |
| | 370 | 10,57 |
| | 490 | 14,00 |

### Ergebnisse

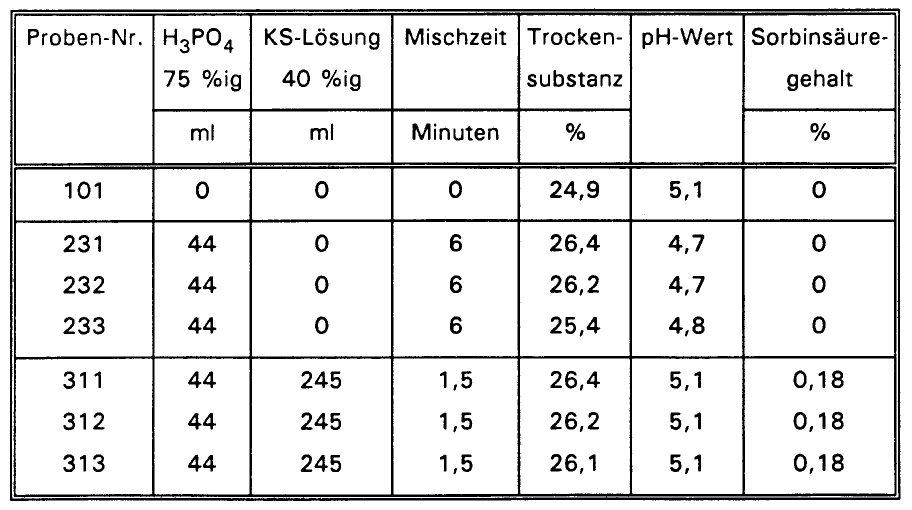

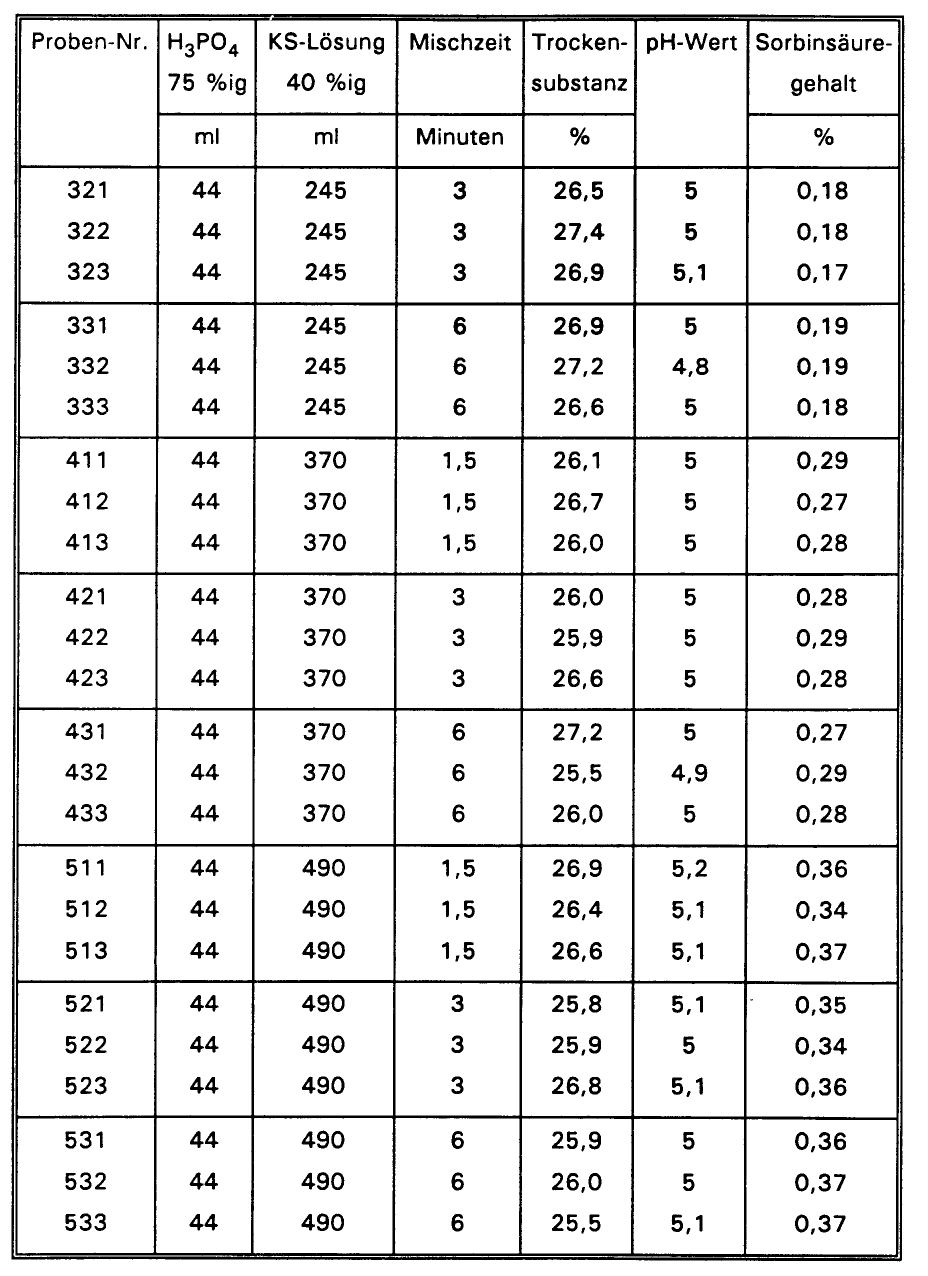

## Patentansprüche

1. Verfahren zur Konservierung von flüssigen und breiigen Futtermitteln aus Kartoffeln, Lebensmittelresten, Preßtreber, Bierhefe, Destillationsschlämpe und ähnlichen Bestandteilen, dadurch gekennzeichnet, daß man diese Produkte unter Verwendung von Intensivmischern räumlich oder zeitlich getrennt mit einer wäßrigen Kaliumsorbat-Lösung und einer wäßrigen Lösung einer physiologisch unbedenklicher Säure versetzt.

2. Verfahren nach Anspruch 1, dadurch gekennzeichnet, daß als physiologisch unbedenklicher Säure Phosphorsäure, Salzsäure, Schwefelsäure, Fumarsäure, Milchsäure, Propinsäure oder Weinsäure, insbesondere Phosphorsäure eingesetzt wird.

3. Verfahren nach Anspruch 1 oder 2, dadurch gekennzeichnet, daß die verwendete Kaliumsorbatlösung 20 bis 60 %ig, insbesondere 30 bis 50 %ig ist.

4. Verfahren nach mindestens einem der Ansprüche 1 oder 3, dadurch gekennzeichnet, daß als physiologisch unbedenkliche Säure Phosphorsäure in einer Konzentration von 40 bis 89, insbesondere 70 bis 80 Gew.-% eingesetzt wird.

5. Verfahren nach mindestens einem der Ansprüche 1 bis 4, dadurch gekennzeichnet, daß 0,05 bis 1, insbesondere 0,08 bis 0,8, bevorzugt 0,1 bis 0,6 Gew.-% Kaliumsorbat (100 %ig) bezogen auf unkonzentriertes Futtermittel eingesetzt wird.

6. Verfahren nach mindestens einem der Ansprüche 1 bis 5, dadurch gekennzeichnet, daß 0,05 bis 1, insbesondere 0,1 bis 0,8, bevorzugt 0,2 bis 0,6 Gew.-% der physiologisch unbedenklichen Säure bezogen auf unkonserviertes Futtermittel eingesetzt wird.

7. Verfahren nach mindestens einem der Ansprüche 1 bis 6, dadurch gekennzeichnet, daß als Futtermittel Preßtreber, der durch Abpressen der Masche mit Filterpressen erhalten wird, eingesetzt wird.

8. Flüssige und breiige Futtermittel aus Kartoffeln, Lebensmittelresten, Preßtreber, Bierhefe, Destillationsschlämpe und ähnlichen Bestandteilen, die unter Verwendung von Intensivmischern räumlich oder zeitlich getrennt mit einer wäßrigen Kaliumsorbat-Lösung und einer wäßrigen Lösung einer physiologisch unbedenklichen Säure versetzt wurden.

9. Futtermittel nach Anspruch 8, dadurch gekennzeichnet, daß sie als physiologisch unbedenkliche Säure Phosphorsäure, Salzsäure, Schwefelsäure, Fumarsäure, Milchsäure, Propinsäure oder Weinsäure, insbesondere Phosphorsäure enthalten.

10. Futtermittel nach Anspruch 8 oder 9, dadurch gekennzeichnet, daß die verwendete Kaliumsorbatlösung 20 bis 60 %ig, insbesondere 30 bis 50 %ig ist.

11. Futtermittel nach mindestens einem der Ansprüche 8 oder 10, dadurch gekennzeichnet, daß als physiologisch unbedenkliche Säure Phosphorsäure in einer Konzentration von 40 bis 89, insbesondere 70 bis 80 Gew.-% eingesetzt wird.

12. Futtermittel nach mindestens einem der Ansprüche 8 bis 11, dadurch gekennzeichnet, daß sie 0,05 bis 1, insbesondere 0,08 bis 0,8, bevorzugt 0,1 bis 0,6 Gew.-% Kaliumsorbat (100 %ig) enthalten.

13. Futtermittel nach mindestens einem der Ansprüche 8 bis 12, dadurch gekennzeichnet, daß sie 0,05 bis 1, insbesondere 0,1 bis 0,8, bevorzugt 0,2 bis 0,6 Gew.-% der physiologisch unbedenklichen Säure enthalten.

14. Futtermittel nach mindestens einem der Ansprüche 8 bis 13, dadurch gekennzeichnet, daß sie aus Preßtreber, der durch Abpressen der Maische mit Filterpressen erhalten wird, bestehen.

15. Futtermittel nach mindestens einem der Ansprüche 8 bis 13, dadurch gekennzeichnet, daß sie aus Preßtreber und/oder herkömmlichen Naßtreber bestehen.
